(19) Europäisches Patentamt / European Patent Office / Office européen des brevets

(11) **EP 4 291 368 B1**

(12) **EUROPEAN PATENT SPECIFICATION**

(45) Date of publication and mention of the grant of the patent:
**15.07.2026 Bulletin 2026/29**

(21) Application number: **22753552.3**

(22) Date of filing: **10.02.2022**

(51) International Patent Classification (IPC):
***B25J 9/16*** (2006.01)    ***B25J 19/02*** (2006.01)
***G01N 35/02*** (2006.01)    ***G01N 35/04*** (2006.01)
***G01N 35/00*** (2006.01)

(52) Cooperative Patent Classification (CPC):
**G01N 35/0099; B25J 9/1615; B25J 9/1679; B25J 9/1697; G01N 35/021; G01N 35/04;** G01N 2035/0406; G01N 2035/0491

(86) International application number:
**PCT/US2022/070606**

(87) International publication number:
**WO 2022/174240 (18.08.2022 Gazette 2022/33)**

(54) **APPARATUS AND METHODS FOR ALIGNING A ROBOTIC ARM WITH A SAMPLE TUBE CARRIER**

VORRICHTUNG UND VERFAHREN ZUR AUSRICHTUNG EINES ROBOTERARMS MIT EINEM PROBENRÖHRCHENTRÄGER

APPAREIL ET PROCÉDÉS D'ALIGNEMENT D'UN BRAS ROBOTIQUE AVEC UN SUPPORT DE TUBE D'ÉCHANTILLON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2021 US 202163148533 P**

(43) Date of publication of application:
**20.12.2023 Bulletin 2023/51**

(73) Proprietor: **Siemens Healthcare Diagnostics, Inc. Tarrytown, NY 10591 (US)**

(72) Inventors:
• **CHANG, Yao-Jen**
  **Princeton, New Jersey 08540 (US)**
• **NALAM VENKAT, Rayal Raj Prasad**
  **Princeton, New Jersey 08542 (US)**
• **POLLACK, Benjamin S.**
  **Jersey City, New Jersey 07302 (US)**
• **KAPOOR, Ankur**
  **Plainsboro, New Jersey 08536 (US)**

(74) Representative: **Schweitzer, Klaus**
  **Dr. Müller Patentanwälte**
  **Mühlstraße 9A**
  **65597 Hünfelden (DE)**

(56) References cited:
US-A1- 2009 055 024    US-A1- 2009 055 024
US-A1- 2018 087 021    US-A1- 2019 299 415
US-A1- 2019 299 415    US-B1- 9 227 323
US-B2- 9 526 587

## Description

### FIELD

This disclosure relates to systems for transporting biological liquid containers via robotics.

### BACKGROUND

In medical testing and processing, the use of robotics may minimize exposure to, or contact with, biological liquid samples (e.g., blood, urine, etc.) and/or may increase productivity. For example, in some automated testing and processing systems (referred to hereinafter as "automated sample analysis systems"), biological liquid containers (such as, e.g., test tubes, vials, and the like, referred to hereinafter as "sample tubes") may be transported to and from sample tube carriers and to and from a testing or processing location in an automated sample analysis system.

Inaccurate alignment of a robotic arm, which may have a gripper configured to hold a sample tube, may result in inaccurate positioning of the robotic arm that could cause collisions or jams between the gripper and a sample tube, and/or between the sample tubes and a sample tube carrier and/or other structures in an automated sample analysis system. Additionally, robotic arm misalignment may cause jarring pickup and place operations of the sample tubes by the gripper, which may contribute to unwanted sample spillage.

US 2009/0055024 A1 discloses a robotic arm and control system including the robotic arm. One or more "active" fiducials are located on the arm, each of which emits its own light. A 3D camera having an associated field-of-view (FOV) is positioned such that at least one fiducial and a target object to be manipulated are in the FOV. The camera produces output signals which vary with the spatial locations of the fiducials and target object. A controller receives the output signals and uses the spatial position information as feedback to continuously guide the arm towards the target object.

US 2019/0299415 A1 D2 describes a method of calibrating a position of a component using onboard crush and crash sensors. The method includes providing a robot with a gripper, providing a calibration tool coupled to the gripper, and providing a component including a recess and crush zone. The crush sensor is configured to sense a vertical crush event and the crash sensor is configured to sense a horizontal crash event. The gripper is moveable in the coordinate system to position a calibration tool within the recess.

Accordingly, methods and apparatus that improve positioning accuracy of a robotic arm relative to an article, such as a sample tube carrier, in automated sample analysis systems are desired.

## SUMMARY

The invention is set out in the appended set of claims.

In some embodiments, apparatus for robotic arm alignment in an automated sample analysis system is provided that includes a robotic arm configured to hold and move a sample tube. The apparatus also includes the following: a sample tube carrier configured to hold the sample tube; a positioning tool configured to be held by the robotic arm, moved by the robotic arm, and held in the sample tube carrier; a plurality of optical components; and a controller. The controller is operable to process images received from the plurality of optical components of the positioning tool held in the sample tube carrier to determine coordinates of a first point on the positioning tool. The controller is also operable to process images received from the plurality of optical components of the positioning tool held by the robotic arm to determine coordinates of a second point on the positioning tool. The controller is further operable to cause movement of the positioning tool held by the robotic arm or held in the sample tube carrier in response to the coordinates of the second point exceeding a pre-determined deviation from the coordinates of the first point.

In some embodiments, another apparatus for robotic arm alignment is provided that includes a sample tube carrier configured to hold a sample tube and having a first marker thereon. The apparatus also includes a robotic arm that includes a gripper configured to hold and move the sample tube, wherein the gripper which has a second marker thereon. The apparatus further includes a plurality of optical components and a controller operably coupled to the robotic arm and to the plurality of optical components. The controller is operable to process images received from the plurality of optical components of the sample tube carrier to determine coordinates of the first marker. The controller is also operable to process images received from the plurality of optical components of the gripper to determine coordinates of the second marker. The controller is further operable to cause movement of the gripper via the robotic arm or of the sample tube carrier via a movable track in response to the coordinates of the second marker exceeding a pre-determined deviation from the coordinates of the first marker.

In some embodiments, a method of aligning a robotic arm in an automated sample analysis system is provided. The method includes identifying a first marker location relative to a sample tube carrier, identifying a second marker location relative to a robotic arm, determining coordinates of the first marker location using a plurality of optical components and a controller, determining coordinates of the second marker location using the plurality of optical components and the controller, and adjusting a position of the robotic arm or the sample tube carrier via the controller in response to the coordinates of the second marker location exceeding a predetermined deviation from the coordinates of the first marker location.

Still other aspects, features, and advantages of this disclosure may be readily apparent from the following detailed description and illustration of a number of example embodiments and implementations, including the best mode contemplated for carrying out the invention. For example, although the description below relates to automated sample analysis systems, the robotic arm alignment apparatus and methods may be readily adapted to other systems employing robotics where precision placement of articles handled by the robotics is desired.

## BRIEF DESCRIPTION OF DRAWINGS

The drawings, described below, are for illustrative purposes and are not necessarily drawn to scale. Accordingly, the drawings and descriptions are to be regarded as illustrative in nature, and not as restrictive.

FIG. 1 illustrates a schematic side view of robotic arm alignment apparatus according to embodiments provided herein.

FIG. 2 illustrates a schematic plan view of an optical components arrangement that may be used in the robotic arm alignment apparatus of FIG. 1 according to embodiments provided herein.

FIG. 3-8 illustrate simplified schematic views of various arrangements of optical components that may be used in the robotic arm alignment apparatus of FIG. 1 according to embodiments provided herein.

FIG. 9 illustrates images that may be captured by the optical components arrangement of FIG. 8 according to embodiments provided herein.

FIGS. 10A and 10B illustrates plan and left side views, respectively, of a positioning tool according to embodiments provided herein.

FIG. 11 illustrates a plan view of another positioning tool according to embodiments provided herein.

FIGS. 12, 13, and 14 each illustrate an image of a positioning tool with a different back panel according to embodiments provided herein.

FIGS. 15A, 15B, and 15C each illustrate an image captured from a different angle of a positioning tool held by a robotic arm according to embodiments provided herein.

FIG. 16 illustrates a simplified side schematic view of a positioning tool and two cameras according to embodiments provided herein.

FIG. 17 illustrates a flowchart of a method of aligning a robotic arm in an automated sample analysis system according to embodiments provided herein.

FIG. 18 illustrates an image of a robotic arm and a sample tube carrier each having a fiducial marker thereon according to embodiments provided herein.

## DETAILED DESCRIPTION

Embodiments described herein provide apparatus and methods for aligning a robotic arm with a sample tube carrier in an automated sample analysis system such that a sample tube (i.e., a biological liquid container, such as, e.g., a test tube, vial, or the like) carried by the robotic arm can be precisely placed at a pre-determined point at the sample tube carrier for inspection (quality check), analysis, and/or transport, for example, in and through the automated sample analysis system.

An optical-based approach is used to perform robotic arm alignment in accordance with one or more embodiments. Multiple optical components (e.g., two or more cameras or only one camera and one or more mirrors and/or prisms) may be arranged at a designated location (e.g., a system center location) in an automated sample analysis system where a sample tube is expected to be received into a sample tube carrier. A first fiducial marker may be "attached" relative to or to a sample tube carrier, and a second fiducial marker may be "attached" relative to or to a robotic arm.

That is, the first fiducial marker may be a physical marker (e.g., a point light source or a sticker with an identifiable shape and/or color) that may be affixed to the sample tube carrier or to a structure relative to the sample tube carrier that is identifiable in images captured by the multiple optical components. The first fiducial marker may instead be a selected location on the sample tube carrier or on a structure relative to the sample tube carrier that is identifiable in images captured by the multiple optical components via a geometric or color contrast change at the selected location.

Likewise, the second fiducial marker may be a physical marker (e.g., a point light source or a sticker with an identifiable shape and/or color) that may be affixed to the robotic arm or to a structure relative to the robotic arm that is identifiable in images captured by the multiple optical components. The second fiducial marker may instead be a selected location on the robotic arm or on a structure relative to the robotic arm that is identifiable in images captured by the multiple optical components via a geometric or color contrast change at the selected location.

In some embodiments, a uniquely designed positioning tool configured to be held in the sample tube carrier and by the robotic arm may include the first and second fiducial markers. The first and second fiducial markers are configured to be locatable and trackable using the multiple optical components and a three-dimensional (3D) coordinate system. A system-determined 3D offset between the coordinates of the first and second fiducial markers can be used to guide robotic arm movement and/or movement of the sample tube carrier mounted on a movable track to align the robotic arm with the sample tube carrier in order to precisely place a sample tube at a pre-determined point at the sample tube carrier.

Advantageously, the optical-based approach may provide higher accuracy and reliability as compared to known alignment methods that rely on a trial-and-error mechanical approach employing collision sensor feedback to adjust movement of a robotic arm attempting to insert a workpiece held by the robotic arm into a circular hole structure. The optical-based approach is a touchless system that directly estimates the relative coordinate difference(s) between a robotic arm and a sample tube carrier. Dependence on mechanical tolerances of related hardware components and degradation to, and replacement of, mechanical parts caused by repeated mechanical collisions are thus avoided.

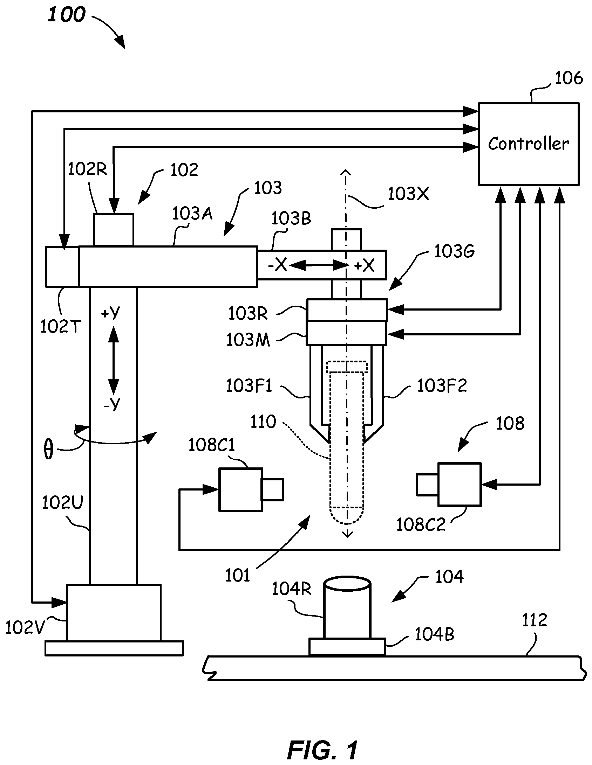

In accordance with one or more embodiments, apparatus and methods for aligning a robotic arm with a sample tube carrier in an automated sample analysis system using an optical-based approach are provided herein, as will be explained in greater detail below in connection with FIGS. 1-18.

FIG. 1 illustrates robotic arm alignment apparatus 100 according to one or more embodiments. Robotic arm alignment apparatus 100 includes a robot 102, a sample tube carrier 104, a controller 106, and a plurality of optical components 108. Robot 102 may be used in an automated sample analysis system, which may include one or more diagnostic machines, clinical analyzers, centrifuges, or other processing or testing machines or stations. Robot 102 includes a robotic arm 103 configured to hold and move a sample tube 110 (shown in phantom) in three dimensions (e.g., X, Y, and Z, where Z is into and out of the page as shown in FIG. 1). Robotic arm 103 may move sample tube 110 from a first location (e.g., a staging location) to a second location (e.g., an inspection, testing, or processing location). In some embodiments, robot 102 may include a rotational motor 102R that may be configured to rotate robotic arm 103 to a desired angular orientation in a rotational direction θ (equivalently a combination of X and Z directions). Robot 102 may also include a vertical motor 102V that may be configured to move an upright 102U in a vertical direction (e.g., along a +/- Y direction as shown). In some embodiments, robotic arm 103 may include a first part 103A, a second part 103B, and a gripper 103G, wherein robot 102 may further include a translational motor 102T that may be configured to move second part 103B and gripper 103G in a horizontal direction (e.g., along a +/- X direction as shown). Other suitable robot motors and mechanisms for imparting 3D motion (e.g., X, Y, θ motion; X, Y, Z motion; or other combinations of motion) may be provided. Suitable feedback mechanisms may be provided for each degree of motion such as from position and/or rotation encoders (not shown). A robot coordinate system may thus include X, Y, θ or X, Y, Z or any subset or combination thereof.

Gripper 103G may be configured to grasp articles, such as sample tubes, and may include two or more gripper fingers 103F1 and 103F2 that may be opposed and relatively moveable to one another. Gripper fingers 103F1 and 103F2 may be driven to open and close by an actuation mechanism 103M, which may be an electric, pneumatic, or hydraulic servo motor. Other suitable mechanisms for causing gripping action of gripper fingers 103F1 and 103F2 may be used. Gripper 103G may also include a gripper rotational motor 103R configured to rotate gripper 103G, and more particularly, gripper fingers 103F1 and 103F2, about a gripper rotational axis 103X to precisely rotationally orient gripper fingers 103F1 and 103F2 as needed. A rotational encoder (not shown) may be included to feedback information concerning the rotational orientation of gripper fingers 103F1 and 103F2 to controller 106. Other types of grippers may be used as well.

Robot 102 may be configured to move sample tube 110 into and out of sample tube carrier 104. Sample tube carrier 104 may include a sample tube receptacle 104R arranged on a sample tube carrier base 104B. Sample tube carrier 104 may be mounted on a movable track 112, which may be configured to transport sample tubes to various locations within an automated sample analysis system.

Controller 106 may include a microprocessor, processing circuits (including A/D converters, amplifiers, filters, etc.), memory, and driving and feedback circuits configured and operable to control the operation of robot 102 and its various components (e.g., rotational motor 102R, translational motor 102T, vertical motor 102V, actuation mechanism 103M, and gripper rotational motor 103R). Controller 106 may also be configured and operable to control the operation of optical components 108 and to process inputs from optical components 108 and various encoders and sensors (not shown). In some embodiments, controller 106 may include a machine-learning algorithm trained to identify first and second fiducial markers in images received from optical components 108.

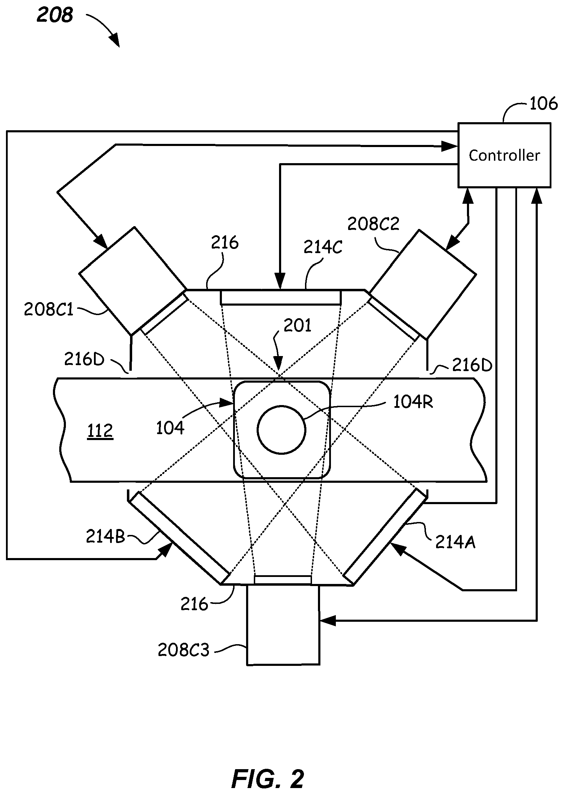

Optical components 108 may include, in some embodiments, two cameras 108C1 and 108C2 that are arranged around a system center location 101 to capture images at different angles of a first fiducial marker (on or relative to robotic arm 103) and a second fiducial marker (on or relative to sample tube carrier 104). Cameras 108C1 and 108C2 may be any suitable device for capturing well-defined digital images, such as, e.g., conventional digital cameras capable of capturing a pixelated image, charged coupled devices (CCD), an array of photodetectors, one or more CMOS sensors, or the like. Controller 106 may process the images received from cameras 108C1 and 108C2 to determine respective 3D positional coordinates of the first and second fiducial markers and to then effect alignment of robotic arm 103 with sample tube carrier 104 based on the 3D offset between the positional coordinates such that sample tube 110 can be precisely positioned in and picked up from sample tube carrier 104 by robotic arm 103, as described in more detail below. Other embodiments may have more or less than two cameras and/or other arrangements of optical components that may be used in robotic arm alignment apparatus 100, as described below in connection with FIGS. 2-8.

FIG. 2 illustrates an optical components arrangement 208 that can be used in robotic arm alignment apparatus 100 according to one or more embodiments. Optical component arrangement 208 includes three cameras 208C1, 208C2, and 208C3 that may be approximately equally spaced from one another (e.g., about 120 degrees apart) around a system center location 201 for receiving sample tube receptacle 104R of a sample tube carrier 104 mounted on movable track 112. Sample tube receptacle 104R is accessible to robot 102 (not shown in FIG. 2). Operation of cameras 208C1, 208C2, and 208C3 may be controlled by controller 106, which may also receive and process images received from cameras 208C1, 208C2, and 208C3.

Optical component arrangement 208 may also include back panels 214A, 214B, and 214C positioned opposite cameras 208C1, 208C2, and 208C3, respectively, with sample tube receptacle 104R situated between respective pairs of camera and back panel. In some embodiments, one or more of back panels 214A, 214B, and 214C may be an active illumination panel (e.g., a white light source) controlled by controller 106. In some embodiments, one or more of back panels 214A, 214B, and 214C may be a passive reflective panel or simply a dark or black background panel with front illumination. In other embodiments, back panels 214A, 214B, and 214C may provide other suitable types of backgrounds or backlighting.

In some embodiments, optical component arrangement 208 may include a housing 216 that may at least partially surround or cover sample tube carrier 104 to minimize outside lighting influences. Housing 216 may include one or more doors 216D to allow sample tube carrier 104 to enter and exit housing 216 via movable track 112. In some embodiments, a ceiling (not shown) of housing 216 may include an opening to provide access to sample tube carrier 104 by robot 102.

Optical components arrangement 208, via cameras 208C1, 208C2, and 208C3, may be used to capture three images (each from a different angle) of a first fiducial marker on or relative to sample tube carrier 104 and a second fiducial marker on or relative to robotic arm 103.

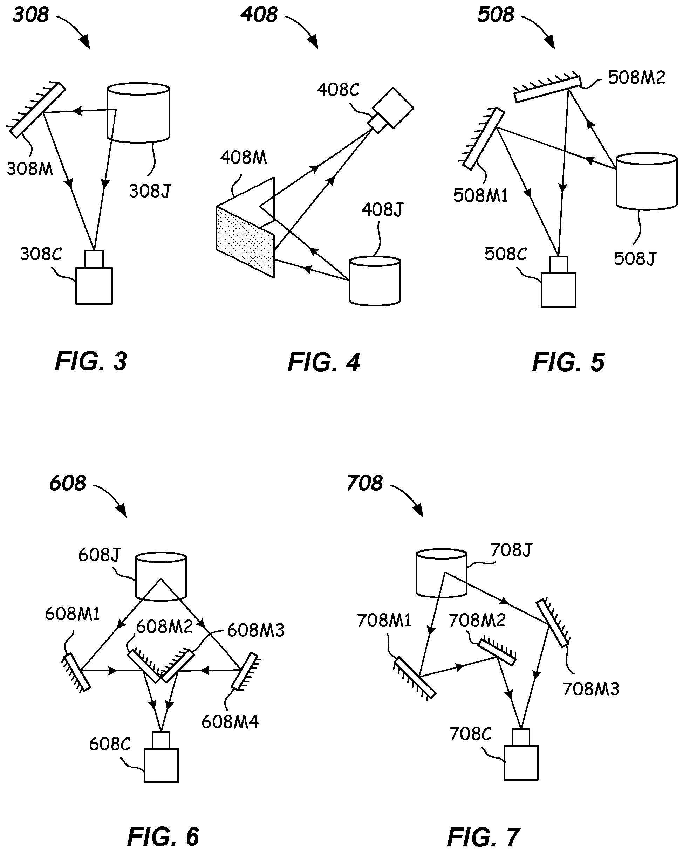

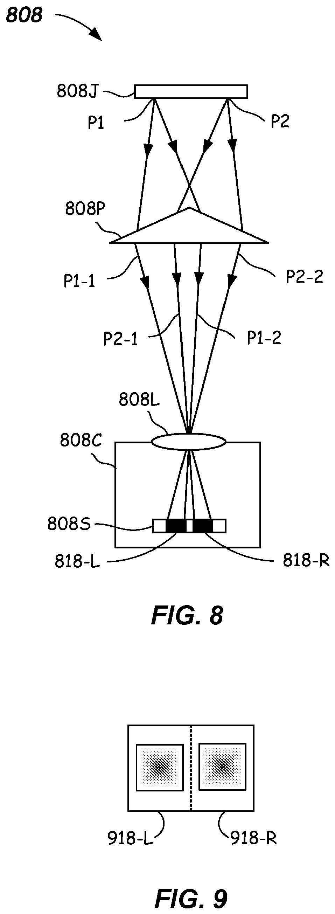

FIGS. 3-8 illustrate other arrangements of optical components that can be used in robotic arm alignment apparatus 100 according to one or more embodiments. For example, as shown in FIG. 3, instead of using multiple cameras, an optical components arrangement 308 may include only one camera 308C and a mirror 308M that can be used to capture two images (each from a different angle) of one or more markers attached to an object 308J. Similarly, FIG. 4 shows an optical components arrangement 408 that may also include only one camera 408C and a bifold mirror 408M that can be used to capture two images (each from a different angle) of one or more markers attached to an object 408J. FIG. 5 shows an optical components arrangement 508 that may include only one camera 508C and two mirrors 508M1 and 508M2 that can be used to capture two images (each from a different angle) of one or more markers attached to an object 508J. FIG. 6 shows an optical components arrangement 608 that may include only one camera 608C and an arrangement of four mirrors 608M1, 608M2, 608M3, and 608M4 that can be used to capture two images (each from a different angle) of one or more markers attached to an object 608J. FIG. 7 shows an optical components arrangement 708 that may include only one camera 708C and an arrangement of three mirrors 708M1, 708M2, and 708M3 that can be used to capture two images (each from a different angle) of one or more markers attached to an object 708J. And FIG. 8 shows an optical components arrangement 808 that may include a prism 808P and only one camera 808C that can be used to capture a pair of sub-images (each from a different angle) of an object 808J. In particular, light rays entering prism 808P are split, enter lens 808L of camera 808C, and create two images 818-L and 818-R (each from a different angle) on sensor plane 808S of camera 808C. Image 818-L is created by light rays represented by light rays P2-2 and P1-2, and image 818-R is created by light rays represented by light rays P1-1 and P2-1, as further illustrated in FIG. 9, which shows a left image 918-L and a right image 918-R captured by camera 808C, each at a different angle created by prism 808P. Without prism 808P, two cameras would be needed (one positioned on the left side of camera 808C and one positioned on the right side of camera 808C) to capture left image 918-L and right image 918-R. Other optical component arrangements are possible using one or more cameras, one or more mirrors, and/or one or more prisms.

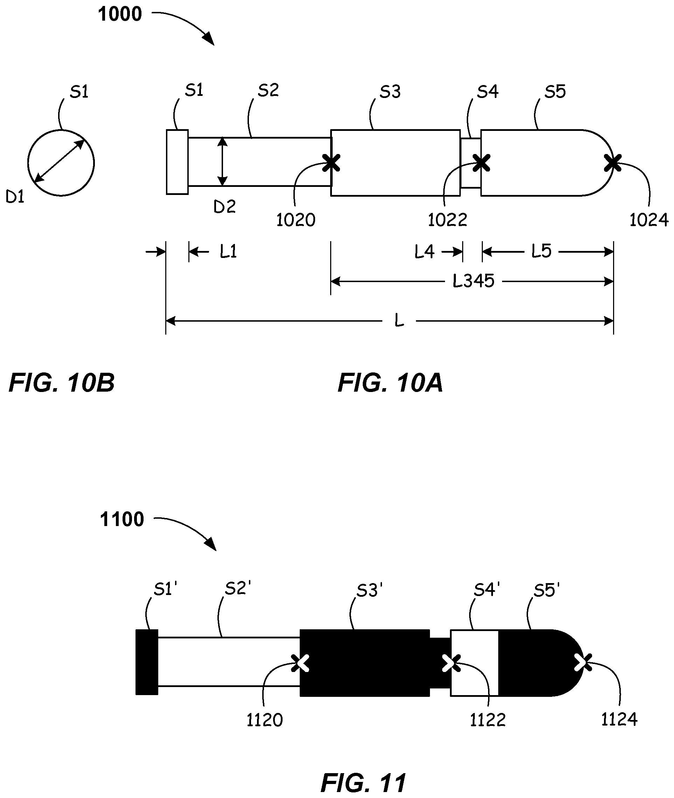

In some embodiments, robotic arm alignment apparatus 100 may also include a positioning tool 1000 illustrated in FIGS. 10A and 10B. Positioning tool 1000 may have a cylindrical structure that resembles a sample tube (e.g., sample tube 110) that can be held and moved by a robotic arm gripper (e.g., robotic arm gripper 103G) and received in and held by a sample tube carrier (e.g., sample tube carrier 104). Positioning tool 1000 may have multiple sections S1, S2, S3, S4, and S5, each of which may have a different geometry (e.g., a different length and/or diameter) than an adjacent section. For example, sections S2 and S4 may each have a smaller diameter D2 than a diameter D1 of sections S1, S3, and S5 wherein, in some embodiments, diameter D1 may be about 16 mm (+/- 0.25 mm) and diameter D2 may be about 12 mm (+/- 0.25 mm). In some embodiments, positioning tool 1000 may have a total length L of about 110 mm (+/- 0.5 mm). Sections S1 and S4 may each have respective lengths L1 and L4 of about 5.0 mm (+/- 0.5 mm), and section S5 may have a length L5 of about 32.5 mm (+/- 0.5 mm). Other suitable numbers of sections and dimensions of positioning tool 1000 are possible.

Positioning tool 1000 may have a first fiducial marker and a second fiducial marker "attached" thereto (e.g., identified thereon). A first fiducial marker 1020 (represented by an "X" in FIG. 10A) may be located at a center point of an intersection of sections S2 and S3 where a geometric change occurs. First fiducial marker 1020 may be located a length L345 from the bottom of positioning tool 1000, which in some embodiments may be about 70.0 mm (+/- 0.5 mm). First fiducial marker 1020 may be used when positioning tool 1000 is received and held in a sample tube carrier, such as sample tube carrier 104, in order to establish a target position at the sample tube carrier. A second fiducial marker 1022 (also represented by an "X" in FIG. 10A) may be located at a center point of an intersection of sections S4 and S5 where a geometric change occurs. Second fiducial marker 1022 may be located from the bottom of positioning tool 1000 by length L5. Second fiducial marker 1022 may be used when positioning tool 1000 is held by robotic arm 103 (and gripper 103G) in order to align robotic arm 103's position with respect to the target position. Other suitable locations for first and second fiducial markers 1020 and 1022 on positioning tool 1000 may be possible. In some embodiments, a single fiducial marker (e.g., fiducial marker 1022) may be used if it is visible (i.e., can be imaged by the optical components) when positioning tool 1000 is held in a sample tube carrier and by robotic arm 103. In such embodiments, positioning tool 1000 may have less sectional geometric changes.

Additionally, or alternatively, to using sectional geometric changes on a positioning tool to identify first and second fiducial markers, color contrast changes on a positional tool may be used in some embodiments to identify first and second fiducial markers, as shown in FIG. 11.

FIG. 11 illustrates a positioning tool 1100 that can be used in robotic arm alignment apparatus 100 according to one or more embodiments. Positioning tool 1100 may also have a cylindrical structure that resembles a sample tube (e.g., sample tube 110) that can be held and moved by a robotic arm gripper (e.g., robotic arm gripper 103G) and received in and held by a sample tube carrier (e.g., sample tube carrier 104). Positioning tool 1100 may have multiple sections S1', S2', S3', S4', and S5', each of which may have a different color contrast (e.g., black or white) than an adjacent section. "Stickering" (i.e., affixing bright white and/or black stickers) may be used to create the color contrasts on positioning tool 1100. Positioning tool 1100 may be optionally constructed in some embodiments to have the same number and dimensions of sections as positioning tool 1000. In other embodiments, positioning tool 1100 may have other sectioning configurations or may not include any sections having different geometries, relying on only color contrast changes to identify the first and second fiducial markers.

Positioning tool 1100 may have a first fiducial marker 1120 and a second fiducial marker 1122 "attached" thereto (e.g., identified thereon). First fiducial marker 1120 (represented by a black/white "X" in FIG. 11) may be located at a center point of an intersection of sections S2' and S3' where both a color contrast change and a geometric change occur. In some embodiments, first fiducial marker 1120 may be located from the bottom of positioning tool 1100 at a length equal or substantially equal to length L345 of positioning tool 1000. First fiducial marker 1120 may be used when positioning tool 1100 is received and held in a sample tube carrier, such as sample tube carrier 104, in order to establish a target position at the sample tube carrier. Second fiducial marker 1122 (also represented by a black/white "X" in FIG. 11) may be located at a center point of an intersection of sections S3' and S4' where both a color contrast change and a geometric change occur. In some embodiments, second fiducial marker 1122 may be located from the bottom of positioning tool 1100 by a length equal or substantially equal to length L5 of positioning tool 1000. Second fiducial marker 1122 may be used when positioning tool 1100 is held by robotic arm 103 (and gripper 103G) in order to align robotic arm 103's position with respect to the target position. Other suitable locations for first and second fiducial markers 1120 and 1122 on positioning tool 1100 may be possible. In some embodiments, a single fiducial marker (e.g., fiducial marker 1122) may be used if it is visible (i.e., can be imaged by the optical components) when positioning tool 1100 is held in a sample tube carrier and by robotic arm 103. In such embodiments, positioning tool 1100 may have less color contrast and sectional geometric changes.

Positioning tool 1100, which has both sectional geometric changes and color contrast changes, may be advantageously used to identify first and second fiducial markers 1120 and 1122 either by sectional geometric changes (as in positioning tool 1000) or by color contrast changes or both.

In alternative embodiments, a bottom tip point of a positioning tool (e.g., a bottom tip point 1024 of positioning tool 1000 and/or a bottom tip point 1124 of positioning tool 1100) may be used instead of second fiducial marker 1022 and/or 1122 if the bottom tip point is visible to all cameras in an optical components arrangement of robotic arm alignment apparatus 100 when the positioning tool is held by a robotic arm gripper (such as, e.g., robotic arm gripper 103G).

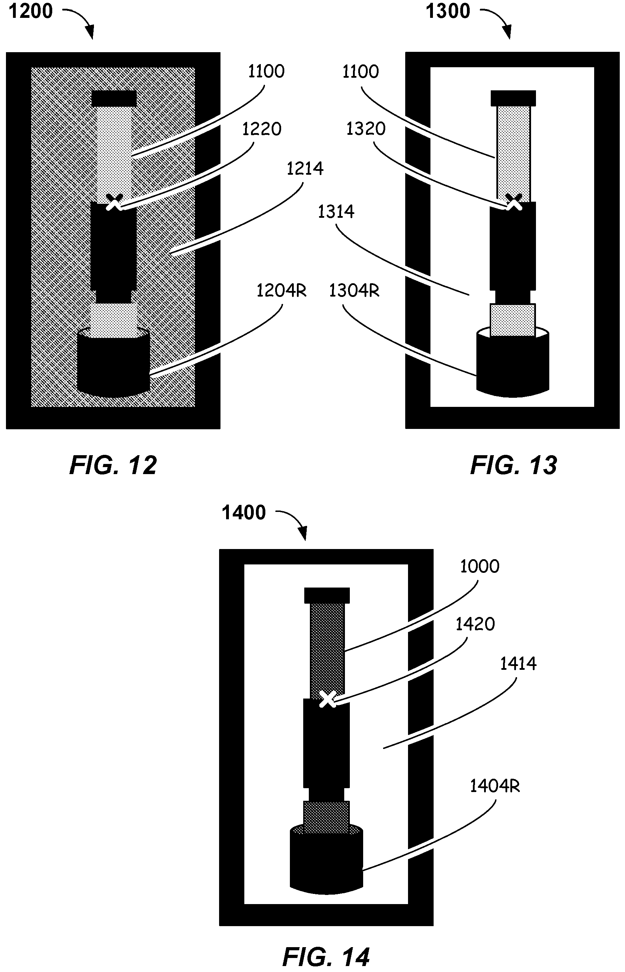

Positioning tools 1000 and 1100 are each advantageously configured to work with multiple back panel setups (e.g., an active illumination back panel, a passive reflective back panel, or simply a dark background back panel with or without front illumination), as shown in FIGS. 12-14.

FIG. 12 illustrates an image 1200 of positioning tool 1100 received in a sample tube receptacle 1204R captured with a camera in an optical components arrangement (such as, e.g., optical components arrangement 108 or 208) using a dark background back panel 1214 according to one or more embodiments. Alternatively, positioning tool 1000 may also be used with dark background back panel 1214. As shown, a first fiducial marker 1220 is identifiable in image 1200 via either a color contrast change or a sectional geometric change.

FIG. 13 illustrates an image 1300 of positioning tool 1100 received in a sample tube receptacle 1304R captured with a camera in an optical components arrangement (such as, e.g., optical components arrangement 108 or 208) using a passive reflective back panel 1314 according to one or more embodiments. Alternatively, positioning tool 1000 may also be used with passive reflective back panel 1314. As shown, a first fiducial marker 1320 is identifiable in image 1300 via either a color contrast change or a sectional geometric change.

FIG. 14 illustrates an image 1400 of positioning tool 1100 received in a sample tube receptacle 1404R captured with a camera in an optical components arrangement (such as, e.g., optical components arrangement 108 or 208) using an active illuminated (e.g., a white light source) back panel 1414 according to one or more embodiments. Alternatively, positioning tool 1000 may also be used with active illuminated back panel 1414. As shown, a first fiducial marker 1420 is identifiable in image 1300 via a sectional geometric change. Note that a positioning tool without sectional geometric changes should not be used with active illuminated back panel 1414, because images captured using active illuminated back panel 1414 may have color contrast changes on a positioning tool washed out by the active illumination.

In some embodiments, robotic arm alignment performed by robotic arm alignment apparatus 100 of FIG. 1 may include placing a positioning tool (e.g., positioning tool 1000 or 1100) in sample tube carrier 104. The positioning tool may be placed in sample tube carrier 104 manually by an operator or automatically by robot 102, albeit robot 102 may not do so precisely if misaligned. The sample tube carrier 104 is positioned at or moved to a system center location, such as, e.g., system center location 101 of FIG. 1 or system center location 201 of FIG. 2, which is within the field(s) of view of the optical components. Optical components 108 (or one of 208, 308, 408, 508, 608, 708, and 808) may capture multiple images, each from a different angle, of the positioning tool held in sample tube carrier 104. The multiple images may be processed by controller 106 to identify a first fiducial marker (e.g., first fiducial marker 1020, 1120, 1220, 1320, or 1420) either by detecting a sectional geometric change or a color contrast change on the positioning tool. Controller 106 may then perform triangulation (using any suitable known method) to determine a 3D location (represented by 3D coordinates in the optical components coordinate system) of the first fiducial marker. The determined 3D coordinates of the first fiducial marker may be used as the target position to which robotic arm 103 is to be aligned.

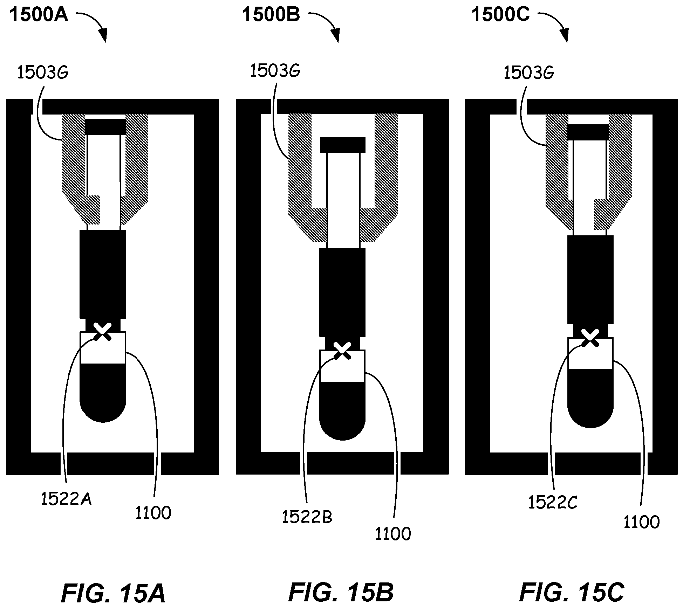

Robotic arm alignment may continue by having robotic arm 103 hold the positioning tool. The positioning tool may be picked up at a storage location by robot 102 or may be coupled to gripper 103G manually by an operator. Controller 106 may cause robotic arm 103 to move to the target location, wherein optical components 108 (or one of 208, 308, 408, 508, 608, 708, and 808) may capture multiple images, each from a different angle, of the positioning tool held by robotic arm 103. For example, FIGS. 15A, 15B, and 15C illustrate multiple images that may be captured by optical components arrangement 208 of FIG. 2. Image 1500A may have been captured by camera 208C1, image 1500B may have been captured by camera 208C3, and image 1500C may have been captured by camera 208C2. Each image, captured at a different angle, shows positioning tool 1100 held by a robotic arm having a gripper 1503G. Images 1500A, 1500B, and 1500C may be processed by controller 106. Controller 106 may identify the location of second fiducial marker 1522A in image 1500A, second fiducial marker 1522B in image 1500B, and second fiducial marker 1522C in image 1500C. Controller 106 may then perform triangulation (again using any suitable known method) to determine the second fiducial marker's 3D coordinates in the optical components coordinate system. Controller 106 may then determine a 3D offset between the coordinates of the first and second fiducial markers. If the 3D offset exceeds a pre-determined deviation, robotic arm 103 may be considered misaligned with sample tube carrier 104 at system center location 201 (i.e., the target location).

Controller 106 may then cause robotic arm 103 to move positioning tool 1100 to a new location based on the deviation in the determined 3D offset. For example, if the determined 3D offset exceeds the pre-determined deviation by +2 mm in the X-direction, -3 mm in the Y-direction, and -1 mm in the Z-direction, controller 106 may cause a robotic arm to move positioning tool 1100 by -2 mm in the X-direction, +3 mm in the Y-direction, and +1 mm in the Z-direction. Note that in some embodiments, controller 106 may additionally compute an equivalent amount of angular rotational movement (e.g., along a +/- angular direction $\theta$ as shown in FIG. 1) of a robotic arm based on the determined X, Y, and Z coordinate deviations where translational movement of the robotic arm in one of the X, Y, and Z directions may not be possible. In some embodiments, controller 106 may additionally or alternatively, as needed based on the deviation in the determined 3D offset and the movement capabilities of the robotic arm, cause movable track 112 to move sample tube carrier 104.

At the new position(s) of robotic arm 103 and/or sample tube carrier 104, images are again captured and processed, and a new 3D offset is determined. This process may continue iteratively until the 3D offset no longer exceeds the predetermined deviation, wherein the robotic arm is considered aligned with the sample tube carrier.

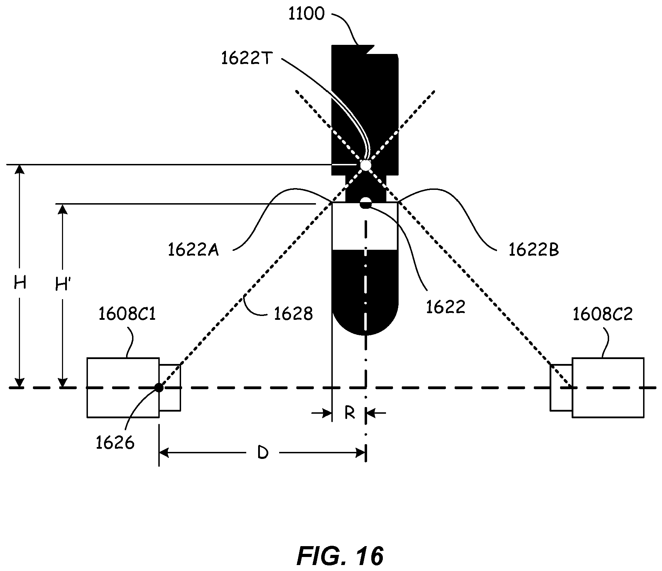

Note that the triangulation process may result in a small height deviation from the true center point of a fiducial marker on the positioning tool. This deviation is caused by detection of the fiducial marker at a surface of the positioning tool, which is a distance R from the true center, where R is the radius of the section to which the fiducial marker is attached. FIG. 16 illustrates a height deviation that may result for a second fiducial marker 1622 imaged by a two-camera optical components arrangement. As shown, an image of positioning tool 1100 (only the lower portion shown) by camera 1608C1 may capture second fiducial marker 1622A, while an image from a different angle of positioning tool 1100 may capture second fiducial marker 1622B. Second fiducial marker 1622 may be the true center point, which has a height H' measured from an optical center 1626 of camera 1608C1 (an optical center of camera 1608C2 may also be used as a reference point). However, triangulation of second fiducial marker 1622 by controller 106 based on the images captured by cameras 1608C1 and 1608C2 may result in 3D coordinates for a triangulated second fiducial marker 1622T, which has a height H measured from optical center 1626 of cameras 1608C1 and 1608C2. In some embodiments, controller 106 may be configured to correct this height deviation by computing:

$$H' = H \times (D - R) / D$$

where D is the distance between the triangulated second fiducial marker 1622T and optical center 1626 along a camera view direction 1628.

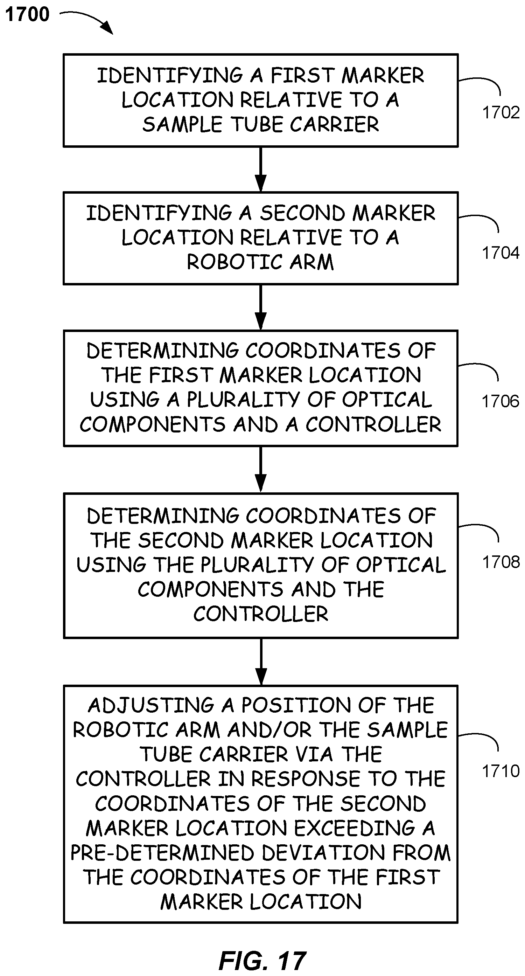

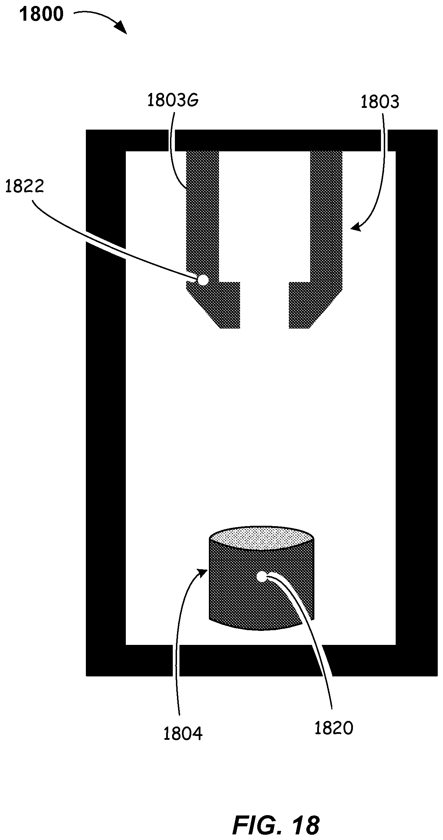

FIG. 17 illustrates a method 1700 of aligning a robotic arm in an automated sample analysis system according to one or more embodiments. At process block 1702, method 1700 may begin by identifying a first marker location relative to a sample tube carrier. For example, a first marker location may be first fiducial marker 1020 located at an intersection of sections S2 and S3 as shown in FIG. 10A, or first fiducial marker 1120 located at an intersection of sections S2' and S3' as shown in FIG. 11. Alternatively, a first marker location may be identified directly on a sample tube carrier 1804 as shown in image 1800 of FIG. 18 according to one or more embodiments by applying a point light source or white sticker on sample tube carrier 1804, which creates a first fiducial marker 1820.

At process block 1704, method 1700 may include identifying a second marker location relative to a robotic arm. For example, a second marker location may be second fiducial marker 1022 located at an intersection of sections S4 and S5 as shown in FIG. 10A, or second fiducial marker 1122 located at an intersection of sections S3' and S4' as shown in FIG. 11. Alternatively, a second marker location may be identified directly on a gripper 1803G of a robotic arm 1803 as shown in image 1800 of FIG. 18 according to one or more embodiments by applying a point light source or white sticker on gripper 1803G, which creates a second fiducial marker 1822.

At process block 1706, method 1700 may include determining coordinates of the first marker location using a plurality of optical components and a controller, and at process block 1708, method 1700 may include determining coordinates of the second marker location using the plurality of optical components and the controller. For example, as shown in FIG. 1, optical components 108 and controller 106 of robotic arm alignment apparatus 100 may be used to capture and process multiple images each of the first and second marker locations and determine coordinates of each in the optical components coordinate system.

At process block 1710, method 1700 may include adjusting a position of the robotic arm and/or the sample tube carrier via the controller in response to the coordinates of the second marker location exceeding a pre-determined deviation from the coordinates of the first marker location.

In some embodiments, method 1700 may further include process blocks (not shown) that include providing a positioning tool configured to be held by a robotic arm and in the sample tube carrier, wherein the positioning tool includes sections having different geometries or color contrast, and wherein the first and second marker locations are each identified at a respective point on the positioning tool where a geometric change or a color contrast change occurs.

The specific method and apparatus embodiments have been shown by way of example in the drawings and are described in detail herein.

## Claims

1. Apparatus for robotic arm (103, 1803) alignment in an automated sample analysis system, comprising:

   a robotic arm configured to hold and move a sample tube (110);
   a sample tube carrier (104) configured to hold the sample tube;
   a positioning tool (1000) configured to be held by the robotic arm, moved by the robotic arm, and held in the sample tube carrier;
   a plurality of optical components (108); and
   a controller (106) operably coupled to the robotic arm (103, 1803) and the plurality of optical components, the controller operable to:

   process images received from the plurality of optical components of the positioning tool (1000) held in the sample tube carrier (104) to determine coordinates of a first point on the positioning tool;
process images received from the plurality of optical components (108) of the positioning tool held by the robotic arm (103, 1803) to determine coordinates of a second point on the positioning tool; and
cause movement of the positioning tool (1000) held by the robotic arm (103, 1803) or held in the sample tube carrier in response to the coordinates of the second point exceeding a pre-determined deviation from the coordinates of the first point.

2. The apparatus of claim 1, wherein the plurality of optical components (108) comprises

- a plurality of cameras (108C1, 108C2; 208C1-208C3; 308C, 308M), or
- one or more prisms (808P) or mirrors (408M; 508M1, 508M2; 608M1-608M4; 708M1-708M3) and only one camera (408C, 508C, 608C, 708C, 808C).

3. The apparatus of claim 1, wherein the positioning tool (1000) is cylindrical and includes sections having different geometries or color contrast, wherein preferably the first point or the second point on the positioning tool (1000) is located at an intersection of two of the sections where a geometric change or a color contrast change occurs.

4. The apparatus of claim 1, wherein the first point and the second point on the positioning tool (1000) are the same point.

5. Apparatus for robotic arm (103, 1803) alignment, comprising:

a sample tube carrier (104) configured to hold a sample tube (110), the sample tube carrier having a first marker thereon;
a robotic arm configured to hold and move the sample tube (110), the robotic arm including a gripper (103G, 1803G) which has a second marker thereon;
a plurality of optical components (108); and
a controller operably coupled to the robotic arm (103, 1803) and to the plurality of optical components, the controller operable to:

process images received from the plurality of optical components (108) of the sample tube carrier (104) to determine coordinates of the first marker;
process images received from the plurality of optical components (108) of the gripper (103G, 1803G) to determine coordinates of the second marker; and

cause movement of the gripper (103G, 1803G) via the robotic arm (103, 1803) or the sample tube carrier (104) via a movable track in response to the coordinates of the second marker exceeding a pre-determined deviation from the coordinates of the first marker.

6. The apparatus of claim 5, wherein the first marker is a physical item attached to the sample tube carrier (104) or the second marker is a physical item attached to the gripper (103G, 1803G), wherein preferably the physical item is a point light source or a sticker.

7. The apparatus of claim 5, wherein the first marker is located at a point where a geometric change or a color contrast change occurs on the gripper (103G, 1803G) or the second marker is located at a point where a geometric change or a color contrast change occurs on the sample tube carrier.

8. A method of aligning a robotic arm (103, 1803) in an automated sample analysis system, the method comprising:

identifying a first marker location relative to a sample tube carrier;
identifying a second marker location relative to a robotic arm (103, 1803);
determining coordinates of the first marker location using a plurality of optical components (108) and a controller;
determining coordinates of the second marker location using the plurality of optical components (108) and the controller; and
adjusting a position of the robotic arm (103, 1803) or the sample tube carrier (104) via the controller in response to the coordinates of the second marker location exceeding a pre-determined deviation from the coordinates of the first marker location.

9. The method of claim 8 wherein the plurality of optical components (108) comprises a plurality of cameras.

10. The method of claim 8 wherein the plurality of optical components (108) comprises one camera and one or more prisms or mirrors.

11. The method of claim 8 wherein the identifying the first marker location comprises identifying the first marker location on a positioning tool (1000) held in the sample tube carrier (104), wherein the identifying the first marker location preferably comprises identifying the first marker location at a point on a positioning tool held in the sample tube carrier (104) where the positioning tool (1000) has a change in geometry or color contrast.

12. The method of claim 8 wherein the identifying the second marker location comprises identifying the second marker location on a positioning tool held by the robotic arm (103, 1803), wherein the identifying the second marker location preferably comprises identifying the second marker location at a point on a positioning tool held by the robotic arm where the positioning tool (1000) has a change in geometry or color contrast.

13. The method of claim 8, further comprising providing a positioning tool (1000) configured to be held by the robotic arm (103, 1803) and in the sample tube carrier, wherein the positioning tool (1000) includes sections having different geometries or color contrast.

14. The method of claim 8 wherein the identifying the first marker location comprises identifying the first marker location on the sample tube carrier.

15. The method of claim 8 wherein the identifying the second marker location comprises identifying the second marker location on the robotic arm (103, 1803).

**Patentansprüche**

1. Vorrichtung zur Ausrichtung eines Roboterarms (103, 1803) in einem automatisierten Probenanalysesystem, die Folgendes umfasst:

     einen Roboterarm, der dazu ausgelegt ist, ein Probenröhrchen (110) zu halten und zu bewegen;
     einen Probenröhrchenträger (104), der dazu ausgelegt ist, das Probenröhrchen zu halten;
     ein Positionierungswerkzeug (1000), das dazu ausgelegt ist, durch den Roboterarm gehalten, durch den Roboterarm bewegt und in dem Probenröhrchenträger gehalten zu werden;
     eine Vielzahl von optischen Komponenten (108); und
     eine Steuerung (106), die betriebsfähig mit dem Roboterarm (103, 1803) und der Vielzahl von optischen Komponenten gekoppelt ist, wobei die Steuerung für Folgendes betriebsfähig ist:

     Verarbeiten von Bildern, die von der Vielzahl von optischen Komponenten des Positionierungswerkzeugs (1000) empfangen werden, das in dem Probenröhrchenträger (104) gehalten wird, um Koordinaten eines ersten Punkts auf dem Positionierungswerkzeug zu bestimmen;

Verarbeiten von Bildern, die von der Vielzahl von optischen Komponenten (108) des Positionierungswerkzeugs empfangen werden, das durch den Roboterarm (103, 1803) gehalten wird, um Koordinaten eines zweiten Punkts auf dem Positionierungswerkzeug zu bestimmen; und
Bewirken einer Bewegung des Positionierungswerkzeugs (1000), das durch den Roboterarm (103, 1803) gehalten wird oder in dem Probenröhrchenträger gehalten wird, als Reaktion darauf, dass die Koordinaten des zweiten Punkts eine vorbestimmte Abweichung von den Koordinaten des ersten Punkts überschreiten.

2. Vorrichtung nach Anspruch 1, wobei die Vielzahl von optischen Komponenten (108) Folgendes umfasst:

     - eine Vielzahl von Kameras (108C1, 108C2; 208C1-208C3; 308C, 308M), oder
     - ein oder mehrere Prismen (808P) oder Spiegel (408M; 508M1, 508M2; 608M1-608M4; 708M1-708M3) und nur eine Kamera (408C, 508C, 608C, 708C, 808C).

3. Vorrichtung nach Anspruch 1, wobei das Positionierungswerkzeug (1000) zylindrisch ist und Abschnitte mit unterschiedlichen Geometrien oder Farbkontrast beinhaltet, wobei sich vorzugsweise der erste Punkt oder der zweite Punkt auf dem Positionierungswerkzeug (1000) an einem Schnittpunkt von zwei der Abschnitte befindet, wo eine geometrische Änderung oder eine Farbkontraständerung auftritt.

4. Vorrichtung nach Anspruch 1, wobei der erste Punkt und der zweite Punkt auf dem Positionierungswerkzeug (1000) der gleiche Punkt sind.

5. Vorrichtung zur Ausrichtung eines Roboterarms (103, 1803), die Folgendes umfasst:

     einen Probenröhrchenträger (104), der dazu ausgelegt ist, ein Probenröhrchen (110) zu halten, wobei der Probenröhrchenträger eine erste Markierung darauf aufweist;
     einen Roboterarm, der dazu ausgelegt ist, das Probenröhrchen (110) zu halten und zu bewegen, wobei der Roboterarm einen Greifer (103G, 1803G) aufweist, der eine zweite Markierung darauf aufweist;
     eine Vielzahl von optischen Komponenten (108); und
     eine Steuerung, die betriebsfähig mit dem Roboterarm (103, 1803) und der Vielzahl von optischen Komponenten gekoppelt ist, wobei die Steuerung für Folgendes betriebsfähig ist:

Verarbeiten von Bildern, die von der Vielzahl von optischen Komponenten (108) des Probenröhrchenträgers (104) empfangen werden, um Koordinaten der ersten Markierung zu bestimmen;

Verarbeiten von Bildern, die von der Vielzahl von optischen Komponenten (108) des Greifers (103G, 1803G) empfangen werden,

um Koordinaten der zweiten Markierung zu bestimmen; und

Bewirken einer Bewegung des Greifers (103G, 1803G) über den Roboterarm (103, 1803) oder den Probenröhrchenträger (104) über eine bewegliche Schiene als Reaktion darauf, dass die Koordinaten der zweiten Markierung eine vorbestimmte Abweichung von den Koordinaten der ersten Markierung überschreiten.

6. Vorrichtung nach Anspruch 5, wobei die erste Markierung ein physisches Element ist, das an dem Probenröhrchenträger (104) angebracht ist, oder die zweite Markierung ein physisches Element ist, das an dem Greifer (103G, 1803G) angebracht ist, wobei vorzugsweise das physische Element eine Punktlichtquelle oder ein Aufkleber ist.

7. Vorrichtung nach Anspruch 5, wobei sich die erste Markierung an einem Punkt befindet, an dem eine geometrische Änderung oder eine Farbkontraständerung an dem Greifer (103G, 1803G) auftritt, oder sich die zweite Markierung an einem Punkt befindet, an dem eine geometrische Änderung oder eine Farbkontraständerung an dem Probenröhrchenträger auftritt.

8. Verfahren zum Ausrichten eines Roboterarms (103, 1803) in einem automatisierten Probenanalysesystem, wobei das Verfahren Folgendes umfasst:

Identifizieren einer ersten Markierungsposition relativ zu einem Probenröhrchenträger;

Identifizieren einer zweiten Markierungsposition relativ zu einem Roboterarm (103, 1803);

Bestimmen von Koordinaten der ersten Markierungsposition unter Verwendung einer Vielzahl von optischer Komponenten (108) und einer Steuerung;

Bestimmen von Koordinaten der zweiten Markierungsposition unter Verwendung der Vielzahl von optischen Komponenten (108) und der Steuerung; und

Anpassen einer Position des Roboterarms (103, 1803) oder des Probenröhrchenträgers (104) über die Steuerung als Reaktion darauf, dass die Koordinaten der zweiten Markierungsposition eine vorbestimmte Abweichung von den Koordinaten der ersten Markierungsposition überschreiten.

9. Verfahren nach Anspruch 8, wobei die Vielzahl von optischen Komponenten (108) eine Vielzahl von Kameras umfasst.

10. Verfahren nach Anspruch 8, wobei die Vielzahl von optischen Komponenten (108) eine Kamera und ein oder mehrere Prismen oder Spiegel umfasst.

11. Verfahren nach Anspruch 8, wobei das Identifizieren der ersten Markierungsposition das Identifizieren der ersten Markierungsposition auf einem Positionierungswerkzeug (1000) umfasst, das in dem Probenröhrchenträger (104) gehalten wird, wobei das Identifizieren der ersten Markierungsposition vorzugsweise das Identifizieren der ersten Markierungsposition an einem Punkt auf einem Positionierungswerkzeug umfasst, das in dem Probenröhrchenträger (104) gehalten wird, wo das Positionierungswerkzeug (1000) eine Änderung in Geometrie oder Farbkontrast aufweist.

12. Verfahren nach Anspruch 8, wobei das Identifizieren der zweiten Markierungsposition das Identifizieren der zweiten Markierungsposition auf einem Positionierungswerkzeug umfasst, das durch den Roboterarm (103, 1803) gehalten wird, wobei das Identifizieren der zweiten Markierungsposition vorzugsweise das Identifizieren der zweiten Markierungsposition an einem Punkt auf einem Positionierungswerkzeug umfasst, das durch den Roboterarm gehalten wird, wo das Positionierungswerkzeug (1000) eine Änderung in Geometrie oder Farbkontrast aufweist.

13. Verfahren nach Anspruch 8, ferner umfassend das Bereitstellen eines Positionierungswerkzeugs (1000), das dazu ausgelegt ist, durch den Roboterarm (103, 1803) und in dem Probenröhrchenträger gehalten zu werden, wobei das Positionierungswerkzeug (1000) Abschnitte mit unterschiedlichen Geometrien oder Farbkontrast beinhaltet.

14. Verfahren nach Anspruch 8, wobei das Identifizieren der ersten Markierungsposition das Identifizieren der ersten Markierungsposition auf dem Probenröhrchenträger umfasst.

15. Verfahren nach Anspruch 8, wobei das Identifizieren der zweiten Markierungsposition das Identifizieren der zweiten Markierungsposition auf dem Roboterarm (103, 1803) umfasst.

**Revendications**

1. Appareil pour l'alignement d'un bras robotique (103, 1803) dans un système d'analyse d'échantillon automatisé, comprenant :

un bras robotique configuré pour maintenir et déplacer un tube d'échantillon (110) ;
un support (104) de tube d'échantillon configuré pour maintenir le tube d'échantillon ;
un outil de positionnement (1000) configuré pour être maintenu par le bras robotique, déplacé par le bras robotique, et maintenu dans le support de tube d'échantillon ;
une pluralité de composants optiques (108) ; et
un contrôleur (106) fonctionnellement couplé au bras robotique (103, 1803) et à la pluralité de composants optiques, le contrôleur pouvant fonctionner pour :

traiter des images reçues en provenance de la pluralité de composants optiques de l'outil de positionnement (1000) maintenu dans le support (104) de tube d'échantillon pour déterminer des coordonnées d'un premier point sur l'outil de positionnement ;
traiter des images reçues en provenance de la pluralité de composants optiques (108) de l'outil de positionnement maintenu par le bras robotique (103, 1803) pour déterminer des coordonnées d'un deuxième point sur l'outil de positionnement ; et
provoquer le déplacement de l'outil de positionnement (1000) maintenu par le bras robotique (103, 1803) ou maintenu dans le support de tube d'échantillon en réponse au fait que les coordonnées du deuxième point dépassent un écart prédéterminé par rapport aux coordonnées du premier point.

2. Appareil selon la revendication 1, dans lequel la pluralité de composants optiques (108) comprend

- une pluralité de caméras (108C1, 108C2 ; 208C1-208C3 ; 308C, 308M), ou
- un ou plusieurs prismes (808P) ou miroirs (408M ; 508M1, 508M2 ; 608M1-608M4 ; 708M1-708M3) et une seule caméra (408C, 508C, 608C, 708C, 808C).

3. Appareil selon la revendication 1, dans lequel l'outil de positionnement (1000) est cylindrique et comporte des sections ayant des géométries ou un contraste de couleur différents, de préférence le premier point ou le deuxième point sur l'outil de positionnement (1000) étant situé à une intersection de deux des sections où un changement géométrique ou un changement de contraste de couleur se produit.

4. Appareil selon la revendication 1, dans lequel le premier point et le deuxième point sur l'outil de positionnement (1000) sont le même point.

5. Appareil pour l'alignement d'un bras robotique (103, 1803), comprenant :

un support (104) de tube d'échantillon configuré pour maintenir un tube d'échantillon (110), le support de tube d'échantillon ayant un premier marqueur sur celui-ci ;
un bras robotique configuré pour maintenir et déplacer le tube d'échantillon (110), le bras robotique comportant une pince (103G, 1803G) qui a un deuxième marqueur sur celle-ci ;
une pluralité de composants optiques (108) ; et
un contrôleur fonctionnellement couplé au bras robotique (103, 1803) et à la pluralité de composants optiques, le contrôleur pouvant fonctionner pour :

traiter des images reçues en provenance de la pluralité de composants optiques (108) du support (104) de tube d'échantillon pour déterminer des coordonnées du premier marqueur ;
traiter des images reçues en provenance de la pluralité de composants optiques (108) de la pince (103G, 1803G) pour déterminer des coordonnées du deuxième marqueur ; et
entraîner un déplacement de la pince (103G, 1803G) via le bras robotique (103, 1803) ou le support (104) de tube d'échantillon via une piste mobile en réponse au fait que les coordonnées du deuxième marqueur dépassent un écart prédéterminé par rapport aux coordonnées du premier marqueur.

6. Appareil selon la revendication 5, dans lequel le premier marqueur est un élément physique fixé au support (104) de tube d'échantillon ou le deuxième marqueur est un élément physique fixé à la pince (103G, 1803G), de préférence l'élément physique étant une source de lumière ponctuelle ou un autocollant.

7. Appareil selon la revendication 5, dans lequel le premier marqueur est situé en un point où un changement géométrique ou un changement de contraste de couleur se produit sur la pince (103G, 1803G) ou le deuxième marqueur est situé en un point où un changement géométrique ou un changement de contraste de couleur se produit sur le support de tube d'échantillon.

8. Procédé d'alignement d'un bras robotique (103, 1803) dans un système d'analyse d'échantillon automatisé, le procédé comprenant :

l'identification d'un premier emplacement de marqueur par rapport à un support de tube d'échantillon ;

l'identification d'un deuxième emplacement de marqueur par rapport à un bras robotique (103, 1803) ;

la détermination de coordonnées du premier emplacement de marqueur en utilisant une pluralité de composants optiques (108) et un contrôleur ;

la détermination de coordonnées du deuxième emplacement de marqueur en utilisant la pluralité de composants optiques (108) et le contrôleur ; et

l'ajustement d'une position du bras robotique (103, 1803) ou du support (104) de tube échantillon via le contrôleur en réponse au fait que les coordonnées du deuxième emplacement de marqueur dépassent un écart prédéterminé par rapport aux coordonnées du premier emplacement de marqueur.

9. Procédé selon la revendication 8, dans lequel la pluralité de composants optiques (108) comprend une pluralité de caméras.

10. Procédé selon la revendication 8, dans lequel la pluralité de composants optiques (108) comprend une caméra et un ou plusieurs prismes ou miroirs.

11. Procédé selon la revendication 8, dans lequel l'identification du premier emplacement de marqueur comprend l'identification du premier emplacement de marqueur sur un outil de positionnement (1000) maintenu dans le support (104) de tube d'échantillon, l'identification du premier emplacement de marqueur comprenant de préférence l'identification du premier emplacement de marqueur en un point sur un outil de positionnement maintenu dans le support (104) de tube d'échantillon où l'outil de positionnement (1000) a un changement de géométrie ou de contraste de couleur.

12. Procédé selon la revendication 8, dans lequel l'identification du deuxième emplacement de marqueur comprend l'identification du deuxième emplacement de marqueur sur un outil de positionnement maintenu par le bras robotique (103, 1803), l'identification du deuxième emplacement de marqueur comprenant de préférence l'identification du deuxième emplacement de marqueur en un point sur un outil de positionnement maintenu par le bras robotique où l'outil de positionnement (1000) a un changement de géométrie ou de contraste de couleur.

13. Procédé selon la revendication 8, comprenant en outre la fourniture d'un outil de positionnement (1000) configuré pour être maintenu par le bras robotique (103, 1803) et dans le support de tube d'échantillon, l'outil de positionnement (1000) comportant des sections ayant des géométries ou un contraste de couleur différents.

14. Procédé selon la revendication 8, dans lequel l'identification du premier emplacement de marqueur comprend l'identification du premier emplacement de marqueur sur le support de tube d'échantillon.

15. Procédé selon la revendication 8, dans lequel l'identification du deuxième emplacement de marqueur comprend l'identification du deuxième emplacement de marqueur sur le bras robotique (103, 1803).

FIG. 1

**FIG. 2**

*308*

*FIG. 3*

*408*

*FIG. 4*

*508*

*FIG. 5*

*608*

*FIG. 6*

*708*

*FIG. 7*

808

**FIG. 8**

**FIG. 9**

1000

S1

D1

S1    S2        S3      S4    S5

D2

1020        1022        1024

L1

L4    L5

L345

L

**FIG. 10B**                    **FIG. 10A**

1100

S1'    S2'        S3'      S4'    S5'

1120        1122        1124

**FIG. 11**

**1200**

1100
1220
1214
1204R

**FIG. 12**

**1300**

1100
1320
1314
1304R

**FIG. 13**

**1400**

1000
1420
1414
1404R

**FIG. 14**

**1500A** ⌐

1503*G*

1522*A*    1100

**FIG. 15A**

**1500B** ⌐

1503*G*

1522*B*    1100

**FIG. 15B**

**1500C** ⌐

1503*G*

1522*C*    1100

**FIG. 15C**

**FIG. 16**

1700

IDENTIFYING A FIRST MARKER
LOCATION RELATIVE TO A
SAMPLE TUBE CARRIER

1702

IDENTIFYING A SECOND MARKER
LOCATION RELATIVE TO A
ROBOTIC ARM

1704

DETERMINING COORDINATES OF
THE FIRST MARKER LOCATION
USING A PLURALITY OF OPTICAL
COMPONENTS AND A CONTROLLER

1706

DETERMINING COORDINATES OF
THE SECOND MARKER LOCATION
USING THE PLURALITY OF OPTICAL
COMPONENTS AND THE
CONTROLLER

1708

ADJUSTING A POSITION OF THE
ROBOTIC ARM AND/OR THE SAMPLE
TUBE CARRIER VIA THE
CONTROLLER IN RESPONSE TO THE
COORDINATES OF THE SECOND
MARKER LOCATION EXCEEDING A
PRE-DETERMINED DEVIATION FROM
THE COORDINATES OF THE FIRST
MARKER LOCATION

1710

*FIG. 17*

**1800**

1803*G*

1803

1822

1804

1820

**FIG. 18**

**REFERENCES CITED IN THE DESCRIPTION**

**Patent documents cited in the description**

- US 20090055024 A1

- US 20190299415 A1